# EUROPEAN PATENT SPECIFICATION

(11) **EP 3 851 606 B1**
(45) Date of publication and mention of the grant of the patent: **21.08.2024**
(21) Application number: 19859671.0
(22) Date of filing: 14.08.2019
(51) Int. Cl.: E04C 3/28, E04C 3/29, B33Y 80/00, E04C 3/06, E04C 3/04

(54) **POLYMERIC PROFILE SEGMENT, HYBRID STRUCTURE AND METHOD FOR MANUFACTURING SAME**
POLYMERPROFILSEGMENT, HYBRIDSTRUKTUR UND VERFAHREN ZU DESSEN HERSTELLUNG
SEGMENT DE PROFILÉ POLYMÈRE, STRUCTURE HYBRIDE ET PROCÉDÉ DE FABRICATION

(30) Priority: 10.09.2018 ES 201830878
(43) Date of publication of application: 21.07.2021
(73) Proprietor: Universitat Politècnica de València, 46022 Valencia (ES)
(72) Inventor: ALBIOL IBÁÑEZ, José Ramón, 46022 Valencia (ES); BONET SENACH, José Luis, 46022 Valencia (ES); MAS BARBERA, Javier, 46022 Valencia (ES); SÁNCHEZ LÓPEZ, Miguel, 46022 Valencia (ES)
(74) Representative: Isern Patentes y Marcas S.L.
(86) International application number: PCT/ES2019/070567
(87) International publication number: WO 2020/053460

(56) References cited:
- EP-A2- 0 878 592
- WO-A1-2016/055222
- CN-U- 203 320 394
- DE-A1- 2 547 897
- DE-A1- 2 547 897
- FR-A1- 3 011 564
- US-A- 3 271 917
- US-A- 4 967 533
- US-A1- 2003 200 720
- US-A1- 2004 031 230
- US-A1- 2016 032 586
- "3D Printed Reinforced Beam", DBT, 19 December 2017 (2017-12-19), XP055691240, Retrieved from the Internet <URL:https://web.archive.org/web/20171219164453/http://dbt.arch.etbz.ch/project/3dprinted> [retrieved on 20190204]

## Description

### OBJECT OF THE INVENTION

The object of the present invention application is to register a hybrid structure, as well as the method for manufacturing same, which incorporates notable innovations and advantages over the techniques used up to now, particularly convenient as a construction beam.

More specifically, the invention proposes the development of a structure composed of concrete and a polymeric profile, which due to the particular arrangement thereof enables the assembly of the structure in the place of use thereof, being economical to manufacture and transport, easy to install and robust in the use thereof.

### BACKGROUND OF THE INVENTION

Today's reinforced concrete structures are difficult to handle and transport. The complicated preparation thereof and transfer of prefabricated systems or the complexity of manufacturing "in situ" at the installation site, and the need for expensive formwork and labour in the execution thereof, raises the need to reduce costs both in the construction and in the commissioning thereof.

Beams made of GFRP (Glass Fibre Reinforced Polymer) and concrete such as that described in document CN103924730 are known in the state of the art. The GRFP material comprises a row of boxes connected to an upper horizontal plate composed of a grid. The horizontal plate acts as a lost formwork to receive the poured concrete, such that the bearing capacity of the composite beam is increased, costs are reduced since the use of formwork is avoided, corrosion is avoided by not using steel, weight is reduced and the execution time is shortened.

Document CN105113712A describes a structural element that can work horizontally as a beam, vertically as a pole or diagonally as tie rods. It adopts a circular cross section or similar and is made of a synthetic material such as FRP (Fibre Reinforced Polymer), preferably GFRP or CFRP (Carbon Fibre Reinforced Polymer). It incorporates longitudinal housings therein manufactured quickly and efficiently thanks to a 3D printer. It is a lightweight but at the same time stiff structure due to the padding with a defined pattern.

Document "Hybrid FRP-UHPFRC composite girders: Part 1" (Composite Structures, Volume 125, July 2015, pages 631-652) explains how FRP has increased in use in the last two decades due to the resistance to corrosion and the high bearing capacity thereof in relation to weight. It has been proposed to use it as slab elements combining the use thereof with other materials such as concrete. This combination has notably increased the properties. In the same way, the document "Perforated FRP ribs for shear connecting of FRP-concrete hybrid beams/decks" (Composite Structures, Volume 152, 15 September 2016, pages 267-276), shows an FRP beam configuration with a lost formwork, which combines the properties of FRP and concrete, providing advantages in terms of the increase in bending stress, reducing deformability and increasing the bearing capacity, providing better corrosion resistance and avoiding the buckling of profiles exclusively made of FRP.

Document US2003/200720A1 describes a structural member includes side walls, a top wall connecting a top region of the side walls, a bottom wall connecting side wall bottoms and extending beyond the side walls to form wings each having one portion of a connector for connecting members to one another, a span connected to the side walls, and truss configurations each connected to the span and the bottom wall and respectively to one side wall. Side walls, top wall, and span define an upper interior chamber and span, truss configurations, and bottom wall define a lower interior chamber. Each truss configuration has a vertical wall and two intermediate walls. An assembly of members interlock with one another in series by connecting a first portion of the connector with a second portion of another member. These interlocked members form a structure for receiving concrete as a base for a ribbed concrete slab. Document US2003/200720A1 discloses a polymeric profile segment according to the preamble of claim 1.

Document US3271917A relates to fiber and metal reinforced plastic constructions comprising structural and decorative structural plastic laminated constructions. Specifically, it describes an article of manufacture comprising a preformed plastic element having two spaced apart vertical webs and a horizontal bottom web interconnecing the said two vertical webs, said element also having a horizontal upper web spaced vertically from said bottom web, a compression resistant material disposed between the upper portions of said vertical webs and resting on said horizontal upper web, said vertical and horizontal webs comprising a resinous composition covering with a fibrous-metal reinforcement disposed in said vertical and horizontal bottom webs, said bottom and upper horizontal webs and portions of said vertical webs defining an enclosed space and tensile load resisting member disposed in said space; and it also describes a linear support structure comprising a porous compression load resistant structural material component, said component encased on at least three sides by a resinous metal fibrous reinforced covering, a web depending said covering and at least one tensile load resisting linear reinforcing means disposed in said web spaced from and opposite said compression load resistant component.

However, these profiles are built along the entire length of the part, which requires expensive installations and they are difficult to transport, making large vehicles with difficult access to various areas necessary. There is still a need for hybrid structures wherein the polymeric profile is divided into segments, with the corresponding benefits to be obtained.

### DESCRIPTION OF THE INVENTION

The present invention has been developed in order to provide a hybrid structure that is configured as a novelty within the field of application and that solves the aforementioned drawbacks.

The hybrid structure object of this invention corresponds to a polymeric profile segment (which can be both natural and synthetic, reinforced with any type of polymeric, metallic or ceramic fibre, short, long or continuous fibre) according to claim 1, defined by at least one core (or web), a lower zone or flange and an upper zone or flange, wherein concrete is deposited, the profile being self-resistant even in the concreting phase.

The main novelty of the present hybrid structure is that the polymeric profile is composed of multiple longitudinal segments assembled together, being able to be assembled and concreted in the place wherein the structure will be installed. This configuration offers greater ease of transport and assembly, reducing the labour for the execution thereof, while eliminating the need for expensive formwork and heavy transport vehicles with difficult access to certain places.

These polymeric segments are manufactured by additive deposition technology (also known as 3D printing) which technique is considered the one that provides the most advantages when it comes to defining complex geometries inside the segments. Likewise, this technology avoids the chemical vapours that are produced in the usual methods by the use of resins (which improves the health of the workers), at the same time that it easily enables the use of recycled polymeric materials (which reduces the carbon footprint).

The upper zone or flange of each segment comprises lateral tabs acting as a collaborative formwork, and ribs acting as stiffening connectors configured to attach the deposited concrete to said flange. These connectors and the lateral tabs, already made in the profile itself, cause the two materials, concrete and polymer, to work together. Furthermore, by placing the stiffeners in the assembly of the cross section of the profile, they enable sufficient structural stiffness so as not to have to use auxiliary shoring elements, centring or formwork, thus reducing labour costs.

According to the invention, the segments of the polymeric profile comprise an internal alveolar structure, wherein the longitudinal direction of the alveoli coincides with the longitudinal direction of the profile. This geometry enables the reduction of the polymeric material to be used, and therefore the weight thereof, while maintaining the structural stiffness of the profile. Alveolar geometry is inspired by the geometry of the human bone in the zone of the epiphysis, wherein there is a portion of spongy bone layer, with a trabecular meshwork (this would be the alveolar formation), and the thicker outer layer wherein the compact bone is; this intelligent natural system confers a very high mechanical capacity with low structural weight. The alveolar structure of the bones generates an isotropic mechanical capacity, as the alveoli are equiaxial, but in the case of the profile of the present invention, the alveoli have a uniaxial geometry along the profile, in order to confer mechanical isotropy in the direction of load application.

In order to assemble the segments with each other, in the case of comprising any zone with said alveolar geometry, the profile may comprise assembly parts with the inverted geometry of the alveoli and which fit in a tongue-and-groove manner between the alveoli of the adjoining segments. Indistinctly, the segments comprise other assembly elements therebetween, according to the invention they comprise a ridge on the contact faces that fits with the adjoining segment, to which it can be fixed with an adhesive.

According to the invention, any of the volumes of the segments may be comprised of solid contours, filled with a semi-hollow structure. The manufacturing technology must be 3D printing. The density and pattern of the filling define the amount of polymer used inside the contours, as well as the weight and resistance thereof. According to the invention the filling patterns include tetrahedrons (3D filling in pyramidal shapes), packed tetrahedron filling is the preferred pattern for the segments of the present invention, as it provides great lightness as well as stiffness.

The dimensions of the alveolar geometry, as well as the thickness of the contours and the semi-hollow filling, are established according to the loads that are needed, by means of a structural calculation. The parameters established are entered into the 3D printer program, according to the features thereof (speed, nozzle size, layer height, printing direction, etc.).

As a complementary option, the core of the segments may comprise a central gap, inside of which it can contain at least one lower coupling and one upper coupling, configured to hold at least one vertical reinforcement sheet. Regardless of this sheet, each segment may comprise openings in the upper flange through which the concrete can access said gap and fill it.

Optionally, the profile comprises a lower and/or upper recess configured to incorporate at least one horizontal reinforcement sheet, longitudinal to the profile, fixed for example by means of an adhesive and/or by means of clipping. In turn, the upper sheet can be configured as a frame also with transverse reinforcement to the profile. Regardless, the profile may comprise holes in the longitudinal direction of the profile, configured to house bars, cables, cords or the like, which can be fixed to the profile by means of an adhesive product, while they can be prestressed. The objective of these elements, which can be metallic or made of FRP (Fibre Reinforced Polymers), is to control and assist the tensioned areas, as well as help to hold all the segments of the profile together.

Another aspect of the present invention consists of the method or procedure, according to claim 13, by which said hybrid structure is manufactured. This method comprises at least the following steps:
- preparation of multiple segments of the profile,
- assembly of the segments to form the profile, either in the place wherein the profiles are prepared or in the place wherein they will be installed,
- placement of the reinforcement elements, such as sheets, bars, cables, cords or the like, prestressed or not,
- positioning of the profile in the place of use thereof,
- pouring of concrete in the upper flange of the profile.

The assembly step of the segments can be carried out by inserting tongue-and-groove assembly parts between the alveoli of the adjacent segments.

When the segments are prepared with couplings for at least one reinforcement sheet, the method comprises a step after assembling the profile and prior to positioning in the place of use thereof, wherein said vertical reinforcement sheet or sheets are inserted. In the same way, it comprises a step of incorporating the at least one horizontal reinforcement sheet in the lower and/or upper recess when the segments are prepared with said recess or recesses.

The present method may further comprise, after assembling the profile, a step of introducing bars, cables, cords or the like, in the event that the segments are prepared with said longitudinal holes configured for it. In addition, it may comprise placing an additional reinforcement formed by bars or sheets in any portion of the structure before pouring the concrete. And in turn, it may comprise the corresponding step of prestressing said bars, cables, cords or the like, before or after pouring the concrete, as well as a final step of injecting a component to completely fill the longitudinal holes and completely cover the elements that have been prestressed, in order to protect said elements and/or improve adherence.

As mentioned above, the preparation of the segments is carried out by means of the additive deposition technique.

These and other features and advantages of the segment, hybrid structure and method object of the present invention will be evident in light of the description of a preferred, but not exclusive, embodiment which is illustrated by way of non-limiting example in the drawings which are attached.

### BRIEF DESCRIPTION OF THE DRAWINGS

Figure 1A is a front perspective view of a first exemplary embodiment of the segment of the present invention.
Figure 1B is a rear view of the first exemplary embodiment of the segment of the present invention.
Figure 2 is a detailed view of the cross section of Figure 1A.
Figure 3 is a perspective view of a second exemplary embodiment of the segment of the present invention.
Figure 4 is a perspective view of a third exemplary embodiment of the segment of the present invention.
Figure 5 is a perspective view of an exemplary embodiment of the assembled beam profile of the present invention.

### DESCRIPTION OF A PREFERRED EMBODIMENT

In light of the aforementioned figures, and in accordance with the adopted numbering, one may observe therein the preferred exemplary embodiments of the invention, which comprise the parts and elements indicated and described in detail below.

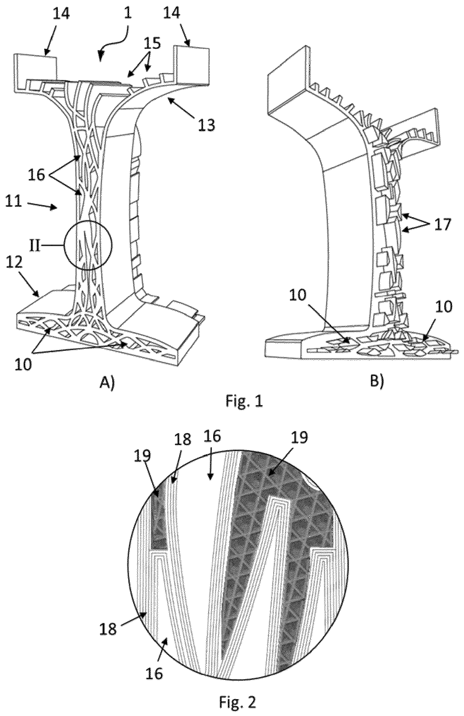

Figs. 1A and 1B show a first exemplary embodiment of the present invention, corresponding to a polymeric profile segment (1), of the longitudinal type, comprising a core (or web) (11), a lower flange (12) and an upper flange (13), with the latter comprising lateral tabs (14) acting as a collaborative formwork, and ribs (15) acting as stiffening connectors configured to attach the concrete to said flange (13).

As can be seen, this embodiment comprises an internal alveolar structure, wherein the longitudinal direction of the alveoli (16) coincides with the longitudinal direction of the segment (1). Assembly parts (17) with the inverted geometry of the alveoli (16) are tongue-and-grooved thereto, being configured as assembly elements to the adjacent segment. In turn, it comprises holes (10) in the longitudinal direction, configured to house bars, cables, cords or the like.

Fig. 2 shows an enlargement of cross section II of Fig. 1A. It shows the solid surface contours (18) defined by several threads of polymeric material and the semi-hollow filling (19) of the internal volumes, with a typology of packed tetrahedrons. To make this possible, this type of profile is manufactured using the additive deposition technique or 3D printing.

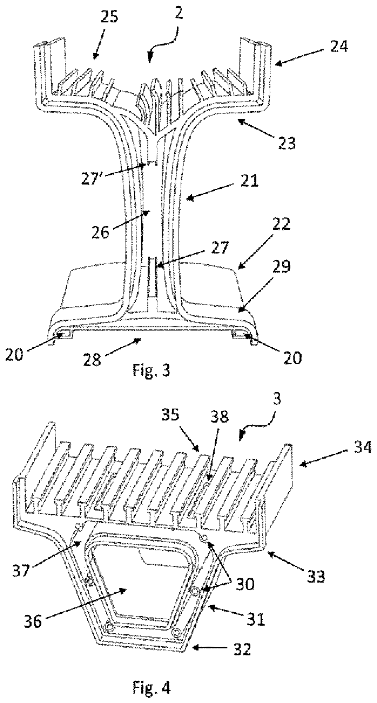

Fig. 3 shows a second exemplary embodiment of the profile segment (2). This embodiment further comprises a core (or web) (21), a lower flange (22) and an upper flange (23), with the latter comprising lateral tabs (24), and ribs (25). Unlike the previous embodiment, this second embodiment comprises a central gap (26) in the core (or web) (23), wherein there are a lower coupling (27) and an upper coupling (27') configured to hold a vertical reinforcement sheet. In turn, this embodiment of the profile segment (2) comprises a recess (28) in the lower surface configured to incorporate a horizontal reinforcement sheet. In this case, the assembly element consists of a ridge (29) located on one of the assembly faces, configured to fit the adjoining segment. In turn, this embodiment further comprises holes (20) in the longitudinal direction, configured to house bars, cables, cords or the like.

Fig. 4 shows a third exemplary embodiment of the profile segment (3). Unlike the previous embodiments, this third embodiment has a drawer profile, although it further comprises a core (or web) (31), a lower zone (32) and an upper flange (33), with the latter comprising lateral tabs (34), and ribs (35). Instead, it comprises a gap (36) in the centre around which a housing (37) for concrete is configured. The concrete accesses this housing through openings (38) located in the upper surface. In turn, this profile comprises holes (30) in the longitudinal direction, configured to house bars, cables, cords or the like.

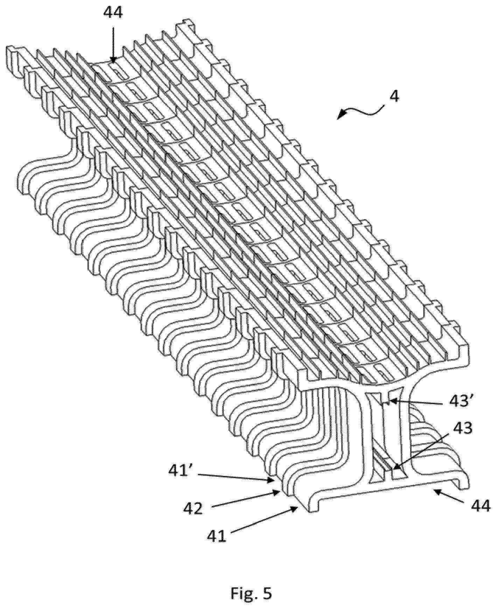

Fig. 5 shows an exemplary embodiment of the assembled beam profile (4), formed by several segments (41, 41') fixed therebetween by means of adhered ridges (42). This example shows the lower (43) and upper (43') couplings for holding a vertical reinforcement sheet, the holes (44) in the upper surface for enabling the concrete to be located around said vertical reinforcement sheet, and the lower recess (44) for incorporating a horizontal reinforcement sheet.

The details, shapes, dimensions and other secondary elements, as well as the materials used in manufacturing the segments and the beams of the invention, may be suitably replaced with others that are technically equivalent and do not depart from the essential nature of the invention or from the scope defined by the claims included below.

## Claims

1. A polymeric profile segment (1, 2, 3), of the longitudinal type, comprising at least one core (11, 21, 31), a lower zone or flange (12, 22, 32), an upper zone or flange (13, 23, 33) and elements for assembly with an adjacent segment (17, 29), with the upper zone or flange (13, 23, 33) comprising one or more lateral tabs (14, 24, 34) acting as a collaborative formwork, and ribs (15, 25, 35) acting as stiffening connectors configured to attach the concrete to said zone or flange (13, 23, 33), comprising an internal alveolar structure, wherein the longitudinal direction of the alveoli (16) coincides with the longitudinal direction of the segment (1), wherein
the assembly element consists of a ridge (29) located on one of the assembly faces configured to fit the adjoining segment, **characterized in that** the polymeric profile segment (1, 2, 3) is manufactured using the additive deposition technique or 3D printing, comprising solid surface contours (18) and internal volumes with a semi-hollow filling (19), wherein
the semi-hollow filling (19) comprises a typology of packed tetrahedrons.

2. The segment according to claim 1, **characterised in that** the core (21, 31) of the segments (2, 3) comprises a central gap (26, 36).

3. The segment according to claim 2, **characterised in that** the surface of the upper zone or flange (13, 23, 33) comprises openings (38, 44) through which the concrete can access the inside of the core (21, 31) and/or the lower zone or flange (22, 32) of the profile.

4. The segment according to claim 3, **characterised in that** the core or cores (21) comprise at least one lower coupling (27) and at least one upper coupling (27') therein, configured to hold at least one vertical reinforcement sheet.

5. The segment according to any of the preceding claims, **characterised in that** it comprises a recess (28) in the lower surface and/or the upper surface configured to incorporate at least one horizontal reinforcement sheet.

6. The segment according to any of the preceding claims, **characterised in that** it comprises holes (10, 20, 30) in the longitudinal direction configured to house bars, cables, cords or the like.

7. A hybrid structure, composed of concrete and a polymeric profile (4) wherein the concrete is located, the profile (4) being defined by a lower zone or flange (12, 22, 32), at least one core (11, 21, 31) and an upper zone or flange (13, 23, 33), with the upper zone or flange (13, 23, 33) comprising one or more lateral tabs (14, 24, 34) acting as a collaborative formwork, and ribs (15, 25, 35) acting as stiffening connectors configured to attach the concrete to said zone or flange (13, 23, 33), wherein
the profile (4) is made up of segments (41, 41') as described in any of claims 1 to 6, **characterised in that** it comprises an adhesive between the ridge (42) of a segment (41) and the adjoining segment (41'), and it comprises holes (10, 20, 30) in the longitudinal direction configured to house bars, cables, cords or the like, and it is manufactured using the additive deposition technique or 3D printing, comprising solid surface contours (18) and internal volumes with a semi-hollow filling (19) **in that** the semi-hollow filling (19) comprises a typology of packed tetrahedrons, and **in that** it comprises an injected component, adhesive or not, to fix to the profile (4) and/or protect the bars, cables, cords or the like housed in the holes (10, 20, 30) thereof.

8. The hybrid structure according to claim 7, **characterised in that** it comprises assembly parts (17) that are tongue-and-grooved between the alveoli (16) of the adjoining segments.

9. The hybrid structure according to claim 7 or 8 when they are dependent on claims 4 to 6,
**characterised in that** it comprises at least one vertical reinforcement sheet located between the lower (43) and upper (43') couplings of the segments (41, 41').

10. The hybrid structure according to any of claims 7 to 9 when they are dependent on claims 5 to 6,
**characterised in that** it comprises a horizontal reinforcement sheet in the recess (44) of the lower zone or flange and/or of the upper zone or flange.

11. The hybrid structure according to claim 10, **characterised in that** an additional reinforcement with bars or sheets can be placed in any portion of the structure.

12. The hybrid structure according to any of claims 7 to 11 when they are dependent on claim 6, **characterised in that** it comprises an injected component, adhesive or not, to fix to the profile (4) and/or protect the bars, cables, cords or the like housed in the holes (10, 20, 30) thereof.

13. A method for manufacturing a hybrid structure, composed of concrete and a polymeric profile (4) wherein the concrete is located, the profile (4) being defined by segments (1, 2, 3, 41, 41'), these segments comprising a lower zone or flange (12, 22, 32), at least one core (11, 21, 31) and an upper zone or flange (13, 23, 33), with the upper flange (13, 23, 33) comprising one or more lateral tabs (14, 24, 34) acting as a collaborative formwork, **characterised in that** it comprises the following steps:
- preparation of multiple segments (1, 2, 3, 41, 41') of said profile (4), as described in any of claims 1 to 6,
- assembly of the segments (1, 2, 3, 41, 41') to form the profile (4),
- placement of the reinforcement elements, such as sheets, bars, cables, cords or the like,
- positioning of the profile (4) in the place of use thereof, and
- pouring of concrete in the upper zone or flange (13, 23, 33) of the segments (1, 2, 3, 41, 41').

14. The method according to claim 13, **characterised in that** the assembly step of the segments (1) is carried out by inserting tongue-and-groove assembly parts (17) between the alveoli (16) of the adjacent segments.

## Patentansprüche

1. Polymerprofilsegment (1, 2, 3) vom Längstyp, umfassend mindestens einen Kern (11, 21, 31), einen unteren Bereich oder Flansch (12, 22, 32), einen oberen Bereich oder Flansch (13, 23, 33) und Elemente zum Zusammenbau mit einem benachbarten Segment (17, 29), wobei der obere Bereich oder Flansch (13, 23, 33) eine oder mehrere seitliche Laschen (14, 24, 34) umfasst, die als eine zusammenwirkende Schalung wirken, und Rippen (15, 25, 35), die als Versteifungsverbinder wirken, die dazu konfiguriert sind, den Beton an dem Bereich oder Flansch (13, 23, 33) zu befestigen, umfassend eine innere Alveolenstruktur, wobei die Längsrichtung der Alveolen (16) mit der Längsrichtung des Segments (1) übereinstimmt, wobei das Zusammenbauelement aus einem Steg (29) besteht, der sich auf einer der Zusammenbauflächen befindet und dazu konfiguriert ist, sich an das angrenzende Segment anzupassen, **dadurch gekennzeichnet, dass** das Polymerprofilsegment (1, 2, 3) unter Verwendung der additiven Abscheidungstechnik oder des 3D-Drucks hergestellt wird, umfassend feste Oberflächenkonturen (18) und Innenvolumina mit einer halbhohlen Füllung (19), wobei die halbhohle Füllung (19) eine Typologie von gepackten Tetraedern umfasst.

2. Segment nach Anspruch 1, **dadurch gekennzeichnet, dass** der Kern (21, 31) der Segmente (2, 3) einen zentralen Spalt (26, 36) umfasst.

3. Segment nach Anspruch 2, **dadurch gekennzeichnet, dass** die Oberfläche des oberen Bereichs oder Flansches (13, 23, 33) Öffnungen (38, 44) umfasst, durch die der Beton in das Innere des Kerns (21, 31) und/oder in den unteren Bereich oder Flansch (22, 32) des Profils gelangen kann.

4. Segment nach Anspruch 3, **dadurch gekennzeichnet, dass** der Kern oder die Kerne (21) innen mindestens eine untere Kupplung (27) und mindestens eine obere Kupplung (27') umfassen, die dazu konfiguriert sind, mindestens eine vertikale Verstärkungsplatte zu halten.

5. Segment nach einem der vorhergehenden Ansprüche, **dadurch gekennzeichnet, dass** es eine Aussparung (28) in der unteren Oberfläche und/oder der oberen Oberfläche umfasst, die dazu konfiguriert ist, mindestens eine horizontale Verstärkungsplatte einzubringen.

6. Segment nach einem der vorhergehenden Ansprüche, **dadurch gekennzeichnet, dass** es in Längsrichtung Löcher (10, 20, 30) umfasst, die dazu konfiguriert sind, Stangen, Kabeln, Schnüren oder dergleichen aufzunehmen.

7. Hybridstruktur, bestehend aus Beton und einem Polymerprofil (4), in das der Beton eingebracht ist, wobei das Profil (4) durch einen unteren Bereich oder Flansch (12, 22, 32), mindestens einen Kern (11, 21, 31) und einen oberen Bereich oder Flansch (13, 23, 33) definiert ist, wobei der obere Bereich oder Flansch (13, 23, 33) eine oder mehrere seitliche Laschen (14, 24, 34) umfasst, die als zusammenwirkende Schalung wirken, und Rippen (15, 25, 35), die als Versteifungsverbinder wirken, die dazu konfiguriert sind, den Beton an dem Bereich oder Flansch (13, 23, 33) zu befestigen, wobei das Profil (4) aus Segmenten (41, 41') wie in einem der Ansprüche 1 bis 6 beschrieben besteht, **dadurch gekennzeichnet, dass** sie einen Klebstoff zwischen dem Steg (42) eines Segments (41) und dem angrenzenden Segment (41') umfasst und dass sie Löcher (10, 20, 30) in Längsrichtung umfasst, die konfiguriert sind, Stangen, Kabeln, Schnüren oder dergleichen aufzunehmen, und dass sie unter Verwendung der additiven Abscheidungstechnik oder des 3D-Drucks hergestellt ist, umfassend feste Oberflächenkonturen (18) und Innenvolumina mit einer halbhohlen Füllung (19), dass die halbhohle Füllung (19) eine Typologie von gepackten Tetraedern umfasst, und dass sie eine eingespritzte Komponente, die klebend oder nicht klebend ist, umfasst, um an dem Profil (4) fixiert zu werden und/oderdie Stangen, Kabel, Schnüre oder dergleichen zu schützen, die in den Löchern (10, 20, 30) davon aufgenommen sind.

8. Hybridstruktur nach Anspruch 7, **dadurch gekennzeichnet, dass** sie Zusammenbauteile (17) umfasst, die zwischen den Alveolen (16) der angrenzenden Segmente mit Nut und Feder versehen sind.

9. Hybridstruktur nach Anspruch 7 oder 8, wenn sie von den Ansprüchen 4 bis 6 abhängen, **dadurch gekennzeichnet, dass** sie mindestens eine vertikale Verstärkungsplatte umfasst, die sich zwischen der unteren (43) und der oberen (43') Kupplung der Segmente (41, 41') befindet.

10. Hybridstruktur nach einem der Ansprüche 7 bis 9, wenn sie von den Ansprüchen 5 bis 6 abhängen, **dadurch gekennzeichnet, dass** sie eine horizontale Verstärkungsplatte in der Aussparung (44) des unteren Bereichs oder Flansches und/oder des oberen Bereichs oder Flansches umfasst.

11. Hybridstruktur nach Anspruch 10, **dadurch gekennzeichnet, dass** eine zusätzliche Verstärkung mit Stäben oder Platten in jedem Abschnitt der Struktur eingebracht werden kann.

12. Hybridstruktur nach einem der Ansprüche 7 bis 11, wenn sie von Anspruch 6 abhängen, **dadurch gekennzeichnet, dass** sie eine eingespritzte Komponente, die klebend oder nicht klebend ist, umfasst, um an dem Profil (4) fixiert zu werden und/oder die Stangen, Kabel, Schnüre oder dergleichen zu schützen, die in den Löchern (10, 20, 30) davon aufgenommen sind.

13. Verfahren zum Herstellen einer Hybridstruktur, bestehend aus Beton und einem Polymerprofil (4), in das der Beton eingebracht ist, wobei das Profil (4) durch Segmente (1, 2, 3, 41, 41') definiert ist, wobei diese Segmente einen unteren Bereich oder Flansch (12, 22, 32), mindestens einen Kern (11, 21, 31) und einen oberen Bereich oder Flansch (13, 23, 33) umfassen, wobei der obere Flansch (13, 23, 33) eine oder mehrere seitliche Laschen (14, 24, 34) umfasst, die als eine zusammenwirkende Schalung wirken, **dadurch gekennzeichnet, dass** es die folgenden Schritte umfasst:
- Vorbereiten von mehreren Segmenten (1, 2, 3, 41, 41') des Profils (4), wie in einem der Ansprüche 1 bis 6 beschrieben,
- Zusammenbauen der Segmente (1, 2, 3, 41, 41'), um das Profil (4) zu bilden,
- Einbringen der Verstärkungselemente wie Platten, Stäbe, Kabel, Schnüre oder dergleichen,
- Positionieren des Profils (4) an seinem Einsatzort und
- Gießen von Beton in den oberen Bereich oder Flansch (13, 23, 33) der Segmente (1, 2, 3, 41, 41').

14. Verfahren nach Anspruch 13, **dadurch gekennzeichnet, dass** der Schritt des Zusammenbauens der Segmente (1) durch Einsetzen von Nut- und Feder-Zusammenbauteilen (17) zwischen die Alveolen (16) der benachbarten Segmente durchgeführt wird.

## Revendications

1. Segment de profilé polymère (1, 2, 3), du type longitudinal, comprenant au moins une âme (11, 21, 31), une zone ou rebord inférieur (12, 22, 32), une zone ou rebord supérieur (13, 23, 33) et des éléments d'assemblage avec un segment adjacent (17, 29 ), la zone ou rebord supérieur (13, 23, 33) comprenant une ou plusieurs pattes latérales (14, 24, 34) faisant office de coffrage collaboratif, et des nervures (15, 25, 35) faisant office de raccords de rigidification conçus pour fixer le béton à ladite zone ou bride (13, 23, 33), comprenant une structure alvéolaire interne, dans lequel la direction longitudinale des alvéoles (16) coïncide avec la direction longitudinale du segment (1), dans lequel l'élément d'assemblage est constitué d'une arête (29) située sur l'une des faces d'assemblage conçue pour épouser le segment attenant, **caractérisé en ce que** le segment de profilé polymère (1, 2, 3) est fabriqué à l'aide de la technique du dépôt additif ou de l'impression 3D, comprenant des contours de surface pleine (18) et des volumes internes avec un remplissage semi-creux (19), dans lequel le remplissage semi-creux (19) comprend une typologie de tétraèdres tassés.

2. Segment selon la revendication 1, **caractérisé en ce que** l'âme (21, 31) des segments (2, 3) comprend un espace central (26, 36).

3. Segment selon la revendication 2, **caractérisé en ce que** la surface de la zone ou rebord supérieur (13, 23, 33) comprend des ouvertures (38, 44) par lesquelles le béton peut accéder à l'intérieur de l'âme (21, 31) et/ou à la zone ou rebord inférieur (22, 32) du profilé.

4. Segment selon la revendication 3, **caractérisé en ce que** le ou les âmes (21) comprennent au moins un accouplement inférieur (27) et au moins un accouplement supérieur (27') dans celles-ci, conçus pour contenir au moins une feuille de renfort verticale.

5. Segment selon l'une quelconque des revendications précédentes, **caractérisé en ce qu'**il comprend un évidement (28) dans la surface inférieure et/ou la surface supérieure conçu pour incorporer au moins une feuille de renfort horizontale.

6. Segment selon l'une quelconque des revendications précédentes, **caractérisé en ce qu'**il comprend des trous (10, 20, 30) dans la direction longitudinale conçus pour loger des barres, des câbles, des cordes ou similaires.

7. Structure hybride, composée de béton et profilé polymère (4) dans lequel est situé le béton, le profilé (4) étant défini par une zone ou rebord inférieur (12, 22, 32), au moins une âme (11, 21, 31) et une zone ou rebord supérieur (13, 23, 33), la zone ou rebord supérieur (13, 23, 33) comprenant une ou plusieurs pattes latérales (14, 24, 34) faisant office de coffrage collaboratif, et des nervures (15, 25, 35) faisant office de raccords de rigidification conçus pour fixer le béton à ladite zone ou rebord (13, 23, 33), dans laquelle le profilé (4) est constitué de segments (41, 41') comme décrit dans l'une quelconque des revendications 1 à 6, **caractérisée en ce qu'**elle comprend un adhésif entre la crête (42) d'un segment (41) et le segment attenant (41'), et elle comprend des trous (10, 20, 30) dans la direction longitudinale conçus pour loger des barres, des câbles, des cordes ou similaires, et elle est fabriquée à l'aide de la technique du dépôt additif ou de l'impression 3D, comprenant des contours de surface solide (18) et des volumes internes avec un remplissage semi-creux (19) **en ce que** le remplissage semi-creux (19) comprend une typologie de tétraèdres tassés, et **en ce qu'**elle comprend un composant injecté, adhésif ou non, pour se fixer au profilé (4) et/ou protéger les barres, les câbles, les cordes ou similaires logés dans les trous (10, 20, 30) de ceux-ci.

8. Structure hybride selon la revendication 7, **caractérisée en ce qu'**elle comprend des pièces d'assemblage (17) à rainure et languette entre les alvéoles (16) des segments attenants.

9. Structure hybride selon la revendication 7 ou 8 lorsqu'elles dépendent des revendications 4 à 6, **caractérisée en ce qu'**elle comprend au moins une feuille de renfort verticale située entre les accouplements inférieur (43) et supérieur (43') des segments (41, 41').

10. Structure hybride selon l'une quelconque des revendications 7 à 9 lorsqu'elles dépendent des revendications 5 à 6, **caractérisée en ce qu'**elle comprend une feuille de renfort horizontale dans l'évidement (44) de la zone ou rebord inférieur et/ou de la zone ou rebord supérieur.

11. Structure hybride selon la revendication 10, **caractérisée en ce qu'**un renfort supplémentaire avec des barres ou des feuilles peut être placé dans n'importe quelle partie de la structure.

12. Structure hybride selon l'une quelconque des revendications 7 à 11 lorsqu'elles dépendent de la revendication 6, **caractérisée en ce qu'**elle comprend un composant injecté, adhésif ou non, pour se fixer au profilé (4) et/ou protéger les barres, les câbles, les cordes ou similaires logés dans les trous (10, 20, 30) de ceux-ci.

13. Procédé de fabrication d'une structure hybride, composée de béton et d'un profilé polymère (4) dans lequel est situé le béton, le profilé (4) étant défini par des segments (1, 2, 3, 41, 41'), ces segments comprenant une zone ou rebord inférieur (12, 22, 32), au moins une âme (11, 21, 31) et une zone ou rebord supérieur (13, 23, 33), avec le rebord supérieur (13, 23, 33) comprenant une ou plusieurs pattes latérales (14, 24, 34) faisant office de coffrage collaboratif, **caractérisé en ce qu'**il comprend les étapes suivantes :
- la préparation de multiples segments (1, 2, 3, 41, 41') dudit profilé (4), comme décrit dans l'une quelconque des revendications 1 à 6,
- l'assemblage des segments (1, 2, 3, 41, 41') pour former le profilé (4),
- le placement des éléments de renfort, tels que des feuilles, des barres, des câbles, des cordes ou similaires,
- le positionnement du profilé (4) sur l'emplacement d'utilisation de celui-ci, et
- le coulage de béton dans la zone ou rebord supérieur (13, 23, 33) des segments (1, 2, 3, 41, 41').

14. Procédé selon la revendication 13, **caractérisé en ce que** l'étape d'assemblage des segments (1) est réalisée par insertion de pièces d'assemblage à rainure et languette (17) entre les alvéoles (16) des segments adjacents.
